# EUROPEAN PATENT SPECIFICATION

(11) **EP 3 925 751 B1**
(45) Date of publication and mention of the grant of the patent: **19.02.2025**
(21) Application number: 20180779.9
(22) Date of filing: 18.06.2020
(51) Int. Cl.: B29B 9/12, B29B 9/16, B29C 44/34, C08J 9/12, C08J 9/18

(54) **PROCESS FOR CONTINUOUSLY PRODUCING EXPANDED FOAM PARTICLES**
VERFAHREN ZUR KONTINUIERLICHEN HERSTELLUNG VON EXPANDIERTEN SCHAUMSTOFFPARTIKELN
PROCESSUS DE PRODUCTION CONTINUE DE PARTICULES DE MOUSSE EXPANSÉES

(43) Date of publication of application: 22.12.2021
(73) Proprietor: BASF SE, 67056 Ludwigshafen (DE)
(72) Inventor: Scherzer, Dietrich, 67433 Neustadt (DE); Nogueira Duarte, Mariana Sofia, 67056 Ludwigshafen (DE); Thompson, Emma Sian, 67056 Ludwigshafen (DE); Ahlers, Juergen, 68649 Gross-Rohrheim (DE); Wassner, Erik, 67056 Ludwigshafen (DE); Stammer, Achim, 67056 Ludwigshafen (DE)
(74) Representative: BASF IP Association

(56) References cited:
- EP-A1- 3 643 739
- CN-A- 104 275 766
- US-A- 4 721 588
- US-A1- 2014 272 379
- US-A1- 2017 036 377

## Description

The present invention relates to a process for continuously producing expanded foam particles by impregnation of thermoplastic polymer granules with nitrogen (N₂) and/or carbon dioxide (CO₂) in the gas phase.

### Relevant Prior Art

WO 2014/198779 relates to a method for producing expanded granulate from a thermoplastic elastomer having a breaking elongation of more than 100% by impregnating the polymer melt with CO₂ and/or N₂ and extruding the impregnated melt through a die plate into an underwater pelletizer to obtain expanded granulate grains having a closed skin. This process requires an extruder and energy for melting the polymer.

WO 96/06129 discloses a process for the production of expanded polyolefin beads by impregnating polyolefin particles with volatile blowing agents at a temperature at most 50°C below and at most 30°C above the crystallite melting point of the polyolefin, which comprises fluidizing particulate propylene or ethylene homopolymers or copolymers under pressure in a fluidized bed and at the same time impregnating them with a blowing agent which is gaseous at the selected temperature, and expanding the impregnated polyolefin particles by decompression.

WO 2015/052265 discloses a method for producing expanded thermoplastic elastomer particles in an autoclave, wherein thermoplastic elastomer particles are impregnated with carbon dioxide, nitrogen or mixtures thereof in the gaseous phase at high pressure in the range from 200 to 600 bar and at temperatures above the glass transition temperature T_{g} - 40°C in case of amorphous elastomers or between the glass transition temperature T_{g} and the melting temperature Tₘ - 5°C in case of semi crystalline thermoplastic elastomers and subsequently expanded at a pressure below the pressure of the impregnation step and ambient pressure.

JP8-113664 A discloses a two-step process comprising a primary expansion step with impregnation of a thermoplastic polyurethane in an autoclave with butane or carbon dioxide as blowing agent and expansion to produce primarily expanded thermoplastic polyurethane foam particles and a secondary expansion step after impregnation of the resulting primary expanded resin beads again with carbon dioxide and expanding in a mold.

US 5,580,503 pertains to a continuous process for expanding thermoplastic minipellets, particularly polypropylene. The minipellets are continuously expanded by continuously charging and mixing water and minipellets in a slurry tank to form a slurry which is subsequently pressurized. A blowing agent such as butane is entrained into the pressurized slurry flow, which said slurry is then heated by a heating means, such as a shell and tube heat exchanger, to the softening point of the minipellets. The heated minipellets are given the time necessary for impregnation by permitting them to flow through one or more impregnation vessels. The impregnated minipellets are released through an orifice into an expansion vessel where the blowing agent flashes off, thereby expanding the minipellets. This process uses a suspension medium such as water and a low-boiling hydrocarbon as blowing agent. This process consumes high energy and needs wastewater treatment.

EP 1 132 422 A2 discloses a method for manufacturing polyolefin foam beads by a continuous process by which the polyolefin foam beads can be produced with increased efficiency and productivity. The method comprises a step of impregnating foaming agent into polyolefin resin by mixing polyolefin resin particles, water and the foaming agent in an impregnation chamber under heat and pressure, followed by a step of storing the polyolefin resin containing the foaming agent in a storing chamber under heat and pressure. Thereafter, the resin particles are subjected to a foaming step by continuously or intermittently discharging the resin particles from the storing chamber to a low pressure expansion chamber by utilizing a discharging device, in the same time period when a next batch of polyolefin resin is added and mixed in the impregnation chamber after being supplied with the resin particles from a resin supply chamber.

The present invention was made in view of the prior art described above, and the object of the present invention is to provide a continuous process for producing foam particles from polymer granules by impregnation with nitrogen (N₂) and/or carbon dioxide (CO₂) in the gas phase.

To solve the problem, the present invention provides a continuous process for continuously producing expanded foam particles, comprising the steps of
a) charging thermoplastic polymer granulates from a storage tank R1 into a pressurized impregnation zone R2,
b) continuously feeding liquidized carbon dioxide, nitrogen or mixture thereof as blowing agent into the impregnation zone R2, the impregnation zone R2 being maintained under supercritical conditions at a temperature in the range from 31 to 250°C and a pressure from 1 to 30 MPa,
c) impregnating the thermoplastic polymer granulates during a residence time between 5 and 600 minutes in the impregnation zone R2 with the blowing agent,
d) discharging the impregnated thermoplastic polymer granulates from the impregnation zone R2 into a low-pressure expansion zone R3 with expansion of the thermoplastic polymer granulates to form expanded foam particles,
e) separating the expanded foam particles from the gaseous blowing agent in a separation zone R4.

Preferably the gaseous blowing agent from step e) is fed through a compressor back to the impregnation zone R2.

The impregnation zone R2 is preferably maintained at a temperature in the range from 31 to 250°C and a pressure from 10 to 22 MPa.

The thermoplastic polymer granulates in step a) are preferably charged into the pressurized impregnation zone R2 through a pressure changing chamber comprising two automated valves or one or more rotary valves.

The impregnated thermoplastic polymer granulates in step d) are preferably discharged from the pressurized impregnation zone R2 through a pressure changing chamber comprising two automated valves, an orifice or a Laval nozzle.

The pressure drop rate in step d) is preferably in the range from 10 to 20 kPa/ms.

Suitable thermoplastic polymers for the granulates include amorphous or semi-crystalline rigid or elastomeric thermoplastics, such as styrene polymers (PS), polyester (PE), polyolefines (PO) polyamides (PA) or thermoplastic polyurethanes (TPU). Preferably polypropylene (PP), polyamide (PA), Polyetherblockamide (PEBA), styrene polymers, polylactic acid (PLA) and biodegradable, aliphatic-aromatic polyesters or mixtures thereof, polyvinyl alcohol (PVOH) or thermoplastic elastomer (TPE) granulates, such as thermoplastic polyurethanes (TPU) or thermoplastic polyester (TPEE) or mixtures of the above-mentioned polymers are used as thermoplastic polymer granulates. Most preferably thermoplastic polyamide granulates are used as thermoplastic polymer granulates.

The process according to the invention is a continuous process to produce foam particles in a one step process using preferably supercritical carbon dioxide as blowing agent. The polymer particles in solid state are dosed into a reaction chamber where impregnation occurs at high pressure and temperature. The temperature is kept above the polymer glass transition temperature (Tg) and below the melting temperature (Tm). Upon saturation with carbon dioxide the particles are released to atmospheric pressure and expand as a result of the pressure drop.

In one embodiment the process uses a pressure vessel which is filled continuously via a rotary valve. The pressure vessel is discharged also continuously via a pressure release gage which only allows single polymer-particle to pass through. After passing the release gage the particles start to foam. The released gases blowing agent may be collected, compressed and reused again.

The process according to the invention allows to control the foaming and the quality of the foamed particles by adjusting the temperature, pressure and time of the impregnation. The time of impregnation is determined by the residence time of the particles and can be adjusted by the size and design of the impregnation zone R2 and the flow rate of the gas stream. The process also allows to control the temperature and speed of the pressure drop at the release gage.

The process according to the invention provides foam particles with homogeneous properties of the individual particles. The densities and the cell-sizes of the foam particles show a very narrow distribution range.

### Brief description of drawings

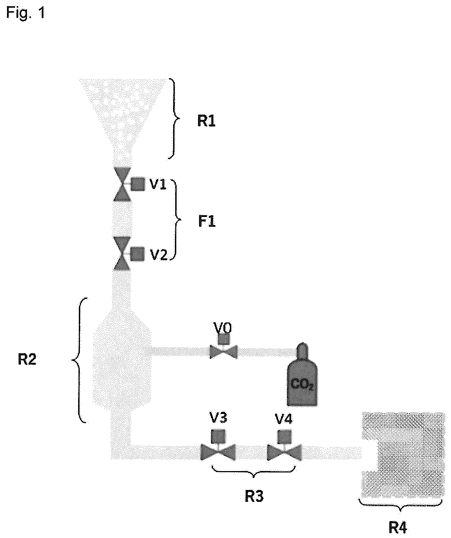

Fig. 1 is a schematic drawing of a preferred equipment for carrying out the process according to the invention.

Solid polymer particles are generally stored in the storage tank R1 at normal temperature and ambient pressure. The storage tank R1 may be a silo, a container or an equivalent equipment.

The polymer particles are dosed continuously into a pressurized chamber F1. Dosing may be done by a series of rotary valves, a slurry pump, by premixing the solid polymer particles and the liquid CO₂, or any other equipment following identical principles of mechanic or hydraulic dosing.

The polymer particles are impregnated with a liquified gas, preferably N₂, CO₂ or a mixture of CO₂ and N₂. The liquified gas is pumped continuously to the impregnation zone R2.The impregnation zone R2 is preferably a reactor and maintained a temperature between 31°C and 250°C and is continuously fed with the liquified gas to keep the desired pressure at a pressure of generally in the range from10 - 300 bar, preferably in the range from 50-250 bar, more preferably in the range from 100 - 220 bar. The impregnation zone R2 is designed to allow a residence time in the range from 5 - 600 min, preferably in the range from 15 - 30 minutes.

During the residence time in the impregnation zone R2, the particles settle to the bottom of R2 and flow by pressure difference into the chamber R3, where the particles undergo an expansion due to pressure drop and are pushed into the solid gas separator R4. Chamber R3 is designed in a way that the expanding gas and, therefore, also the particles, reach the velocity of sound. R3 may be a nozzle, an orifice, a capillary tube or an expansion chamber, which is able to induce a pressure drop rate of 100 to 200 mbar/ms

In a preferred embodiment the foamed particles leave the separator R4, from the bottom by gravity and the expanded gas is recompressed by a compressor C1 and returned to the impregnation zone R2. The separator does not allow the foamed particles to leave with the gas. The outlet pipe of the separator is designed so that the settling velocity of the foamed particles is larger than 1.5 times the gas velocity.

The foamed particles may be stored in a storage tank R5.

Particles are foamed up to 18 times of the volume of the origin particles. The densities of the foamed particles are generally in the range from 200 kg/l to 300 kg/l. The foamed particles have a fine pore structure and homogeneous foam morphology

The process according to the invention has the advantage that it does not need to use of solvents (VOC) or water. The blowing agent CO₂ and/or N₂ may be recycled. It is a continuous process and the reactor does not need to be opened or closed for dosing the polymer particles.

### Examples

Hereinafter, the present invention is described in more detail and specifically with reference to the Examples, which however are not intended to limit the present invention.

### Materials used:

- TPU: Elastollan^{®}1180A, thermoplastic polyurethane particles from BASF Polyurethanes GmbH
- PA 6/6.36: Ultramid Flex, thermoplastic copolyamide particles from BASF SE

### Experimental setup for continuously producing expanded foam particles:

The experimental step as shown in Fig. 1 is equipped with a container R1 to store the particles, connected by a pipe, in which two valves here named V1 and V2 are placed, to an impregnation reactor R2. The impregnation reactor R2 is continuously fed with gas to keep the pressure constant. The temperature of the impregnation reactor is controlled via a jacket with hot fluid flow. The pressure is controlled with a pressure gauge and a control valve, here named V0. The outlet from the reactor is a pipe to the atmosphere, in which two valves here named V3 and V4 are placed.

### Continuous operation sequence (steps 1 - 9):

1. Solid thermoplastic polymer particles are stored in a container R1 above V1.
2. V1 opens fully and the particles fall by gravity to the chamber F1 between V1 and V2. The pressure in chamber between V1 and V2 is equalized to atmospheric pressure.
3. V1 is closed.
4. V2 opens fully. The particles fall into the impregnation reactor R2 by gravity. The pressure in the chamber F1 between V1 and V2 is equalized to the pressure in the impregnation reactor R2.
5. V2 is closed.
6. V3 opens fully after the impregnation time (20 minutes). The particles flow by pressure difference into the chamber R3 between V3 and V4. The pressure in chamber between V3 and V4 is equalized to the pressure in the impregnation reactor R2.
7. V3 is closed. Immediately after closing V3 step 1 is repeated.
8. V4 opens fully. The particles flow by pressure difference to a collecting net R4 which is at atmospheric pressure. The particles experience a pressure drop equal to the difference between the pressure (150 bar) in the impregnation reactor R2 and atmospheric pressure, which makes the gas inside the particles expand and the particles foam. The pressure in chamber R3 between V3 and V4 is equalized to atmospheric pressure.
9. V4 is closed.

### Example 1:

20 g TPU minipellets (Elastollan^{®} 1180A) were stored in R1 and dosed via F1 into the pressurized reactor R2 (pressurized at 150 bar) and impregnated with carbon dioxide at 130 C. After a residence time of 20 min, the impregnated particles were released to ambient pressure through R3 and were collected as expanded foam particles in a catch pot R4. The average density of the foamed particles was 200 g/l.

### Example 2:

20 g of PA 6/6.36 minipellets (Ultramid^{®}Flex) were stored in R1 and dosed via F1 into the pressurized reactor R2 (pressurized at 200 bar) and impregnated with carbon dioxide at 198 C . After a residence time of 20 min the impregnated particles were released to ambient pressure through R3 and were collected as expanded foam particles in a catch pot R4. The average density of the foamed particles was 170 g/l.

## Claims

1. A process for continuously producing expanded foam particles, comprising the steps of
a) charging thermoplastic polymer granulates from a storage tank R1 into a pressurized impregnation zone R2,
b) continuously feeding liquidized carbon dioxide, nitrogen or mixture thereof as blowing agent into the impregnation zone R2, the impregnation zone R2 being maintained under supercritical conditions at a temperature in the range from 31 to 250°C and a pressure from 1 to 30 MPa,
c) impregnating the thermoplastic polymer granulates during a residence time between 5 and 600 minutes in the impregnation zone R2 with the blowing agent,
d) discharging the impregnated thermoplastic polymer granulates from the impregnation zone R2 into a low-pressure expansion zone R3 with expansion of the thermoplastic polymer granulates to form expanded foam particles,
e) separating the expanded foam particles from the gaseous blowing agent in a separation zone R4.

2. A process according to claim 1, wherein the gaseous blowing agent from step e) is fed through a compressor back to the impregnation zone R2.

3. A process according to claim 1 or 2, wherein the impregnation zone R2 is maintained at a temperature in the range from 31 to 250°C and a pressure from 10 to 22 MPa.

4. A process according to any of claims 1 to 3, wherein the thermoplastic polymer granulates in step a) are charged into the pressurized impregnation zone R2 through a pressure changing chamber comprising two automated valves or one or more rotary valves.

5. A process according to any of claims 1 to 4, wherein the impregnated thermoplastic polymer granulates in step d) are discharged from the pressurized impregnation zone R2 through a pressure changing chamber comprising two automated valves, an orifice or a Laval nozzle.

6. A process according to any of claims 1 to 5, wherein the pressure drop rate in step d) is in the range from 10 to 20 kPa/ms.

7. A process according to any of claims 1 to 6, wherein thermoplastic elastomer granulates are used as thermoplastic polymer granulates.

8. A process according to any of claims 1 to 6, wherein thermoplastic polyamide granulates are used as thermoplastic polymer granulates.

9. A process according to any of claims 1 to 6, wherein thermoplastic polyurethane (TPU), polyetherblockamide (PEBA), styrene polymers, polylactic acid (PLA), biodegradable, aliphatic-aromatic polyesters or mixtures thereof are used as thermoplastic polymer granulates.

## Patentansprüche

1. Verfahren zur kontinuierlichen Herstellung von expandierten Schaumstoffpartikeln, umfassend die Schritte
a) Laden von thermoplastischem Polymergranulat aus einem Vorratsbehälter R1 in eine druckbeaufschlagte Imprägnierzone R2,
b) kontinuierliches Zuführen von verflüssigtem Kohlendioxid, Stickstoff oder einem Gemisch davon als Treibmittel in die Imprägnierzone R2, wobei die Imprägnierzone R2 unter überkritischen Bedingungen bei einer Temperatur in dem Bereich von 31 bis 250 °C und einem Druck von 1 bis 30 MPa gehalten wird,
c) Imprägnieren des thermoplastischen Polymergranulats mit dem Treibmittel während einer Verweilzeit zwischen 5 und 600 Minuten in der Imprägnierzone R2,
d) Ausstoßen des imprägnierten thermoplastischen Polymergranulats aus der Imprägnierzone R2 in eine Niederdruck-Expansionszone R3 unter Expansion des thermoplastischen Polymergranulats, um expandierte Schaumstoffpartikel zu bilden,
e) Trennen der expandierten Schaumstoffpartikel von dem gasförmigen Treibmittel in einer Trennzone R4.

2. Verfahren nach Anspruch 1, wobei das gasförmige Treibmittel aus Schritt e) durch einen Kompressor zurück in die Imprägnierzone R2 geführt wird.

3. Verfahren nach Anspruch 1 oder 2, wobei die Imprägnierzone R2 bei einer Temperatur in dem Bereich von 31 bis 250 °C und einem Druck von 10 bis 22 MPa gehalten wird.

4. Verfahren nach einem der Ansprüche 1 bis 3, wobei das thermoplastische Polymergranulat bei Schritt a) durch eine Druckwechselkammer, die zwei automatisierte Ventile oder ein oder mehrere Drehventile umfasst, in die druckbeaufschlagte Imprägnierzone R2 geladen wird.

5. Verfahren nach einem der Ansprüche 1 bis 4, wobei das imprägnierte thermoplastischen Polymergranulat bei Schritt d) aus der druckbeaufschlagten Imprägnierzone R2 durch eine Druckwechselkammer, die zwei automatisierte Ventilen, eine Öffnung oder eine Lavaldüse umfasst, ausgestoßen wird.

6. Verfahren nach einem der Ansprüche 1 bis 5, wobei die Druckabfallrate bei Schritt d) in dem Bereich von 10 bis 20 kPa/ms liegt.

7. Verfahren nach einem der Ansprüche 1 bis 6, wobei thermoplastisches Elastomergranulat als thermoplastisches Polymergranulat verwendet wird.

8. Verfahren nach einem der Ansprüche 1 bis 6, wobei thermoplastisches Polyamidgranulat als thermoplastisches Polymergranulat verwendet wird.

9. Verfahren nach einem der Ansprüche 1 bis 6, wobei thermoplastisches Polyurethan (TPU), Polyetherblockamid (PEBA), Styrolpolymere, Polymilchsäure (PLA), bioabbaubare aliphatisch-aromatische Polyester oder Gemische davon als thermoplastisches Polymergranulat verwendet wird.

## Revendications

1. Procédé de production continue de particules de mousse expansée, comprenant les étapes de
a) chargement de granulés de polymère thermoplastique provenant d'un réservoir de stockage RI dans une zone d'imprégnation pressurisée R2,
b) introduction continue de dioxyde de carbone liquéfié, d'azote ou d'un mélange correspondant comme agent gonflant dans la zone d'imprégnation R2, la zone d'imprégnation R2 étant maintenue dans des conditions supercritiques à une température dans la plage de 31 à 250 °C et une pression de 1 à 30 MPa,
c) imprégnation des granulés de polymère thermoplastique pendant un temps de séjour compris entre 5 et 600 minutes dans la zone d'imprégnation R2 avec l'agent gonflant,
d) déchargement des granulés de polymère thermoplastique imprégnés de la zone d'imprégnation R2 dans une zone d'expansion à basse pression R3 avec expansion des granulés de polymère thermoplastique pour former des particules de mousse expansée,
e) séparation des particules de mousse expansée de l'agent gonflant gazeux dans une zone de séparation R4.

2. Procédé selon la revendication 1, dans lequel l'agent gonflant gazeux de l'étape e) est renvoyé à travers un compresseur vers la zone d'imprégnation R2.

3. Procédé selon la revendication 1 ou 2, dans lequel la zone d'imprégnation R2 est maintenue à une température dans la plage de 31 à 250 °C et une pression de 10 en 22 MPa.

4. Procédé selon l'une quelconque des revendications 1 à 3, dans lequel les granulés de polymère thermoplastique de l'étape a) sont chargés dans la zone d'imprégnation pressurisée R2 par l'intermédiaire d'une chambre de changement de pression comprenant deux vannes automatisées ou une ou plusieurs vannes rotatives.

5. Procédé selon l'une quelconque des revendications 1 à 4, dans lequel les granulés de polymère thermoplastique imprégnés dans l'étape d) sont déchargés de la zone d'imprégnation pressurisée R2 à travers une chambre de changement de pression comprenant deux vannes automatisées, un orifice ou une buse de Laval.

6. Procédé selon l'une quelconque des revendications 1 à 5, dans lequel la vitesse de chute de pression à l'étape (d) est dans la plage de 10 à 20 kPa/ms.

7. Procédé selon l'une quelconque des revendications 1 à 6, dans lequel des granulés d'élastomère thermoplastique sont utilisés en tant que granulés de polymère thermoplastique.

8. Procédé selon l'une quelconque des revendications 1 à 6, dans lequel des granulés de polyamide thermoplastique sont utilisés en tant que granulés de polymère thermoplastique.

9. Procédé selon l'une quelconque des revendications 1 à 6, dans lequel un polyuréthane thermoplastique (TPU), un polyétherblocamide (PEBA), des polymères de styrène, un poly(acide lactique) (PLA), des polyesters aliphatiques-aromatiques, biodégradables ou des mélanges correspondants sont utilisés en tant que granulés de polymère thermoplastique.
